# EUROPEAN PATENT APPLICATION

(11) **EP 4 008 837 A1**
(43) Date of publication of application: **08.06.2022**
(21) Application number: 20211668.7
(22) Date of filing: 03.12.2020
(51) Int. Cl.: D21H 19/00, H01M 4/04, H01M 4/13, H01M 4/139, H01M 4/66, H01M 4/80

(54) **PAPER BASED MATERIALS FOR THE STORAGE OF ELECTRICAL ENERGY**

(71) Applicant: Murray-Smith, Robert, Herne Bay, Kent CT6 6RG (GB); Kabel Premium Pulp & Paper GmbH, 58099 Hagen (DE)
(72) Inventor: MURRAY-SMITH, Robert, Herne Bay, Kent, CT6 6RG (GB); ZERWES, Ludger, 50859 Köln (DE); EBELING, Juha, 00100 Helsinki (FI)
(74) Representative: Michalski Hüttermann & Partner Patentanwälte mbB

(57) **Abstract**

The invention relates to coated paper where a base paper is coated at least on one side and where the coating comprises at least 5 wt.% carbon material and at least 5 wt.% of an open-framework material and at least 1 wt.% binder, a process for the manufacture of the means, a composition for coating paper, coated paper, a process for the manufacture of the coated paper, a means for storing electricity, use of the coated paper as well as a method for storing electricity.

## Description

The invention relates to coated paper where the paper is coated at least on one side and where the coating comprises at least 5 wt.% carbon material and at least 5 wt.% of an open-framework material and at least 1 wt.% binder, a process for the manufacture of the means, a composition for coating paper, coated paper, a process for the manufacture of the coated paper, a means for storing electricity, use of the coated paper as well as a method for storing electricity.

The field of paper-based means for storing electricity such as paper batteries or paper-based capacitors has gained attention in the last years. However, it has been difficult to produce the materials for these batteries on a large scale with sufficient energy density at a cost appropriate for mass production.

The use of paper as a medium for the construction of electrical energy storage devices is attractive for several reasons, e.g. ease of manufacture, adaptable form factor, and flexibility.

Traditional mass market, cost effective primary batteries are predominantly the alkaline zinc manganese style batteries; these are a long standing chemistry and in the basic form constitute the bulk of primary, or non-rechargeable, batteries available on the market today. Considerable work has been done to enable this chemistry to cross the boundary from primary to secondary style storage devices because of the attractiveness of cost of material, safety, non-toxicity and relative abundance of the raw materials.

The zinc electrode, due to its high energy per unit volume, abundance, cost, environmental friendliness and high hydrogen over-potential is a sought after (anode) active-material for use in aqueous electrolytes.

Within an alkaline primary based battery, the predominant electrochemical reaction of the zinc electrode proceeds via the following dissolution-precipitation reaction:

Zn + 2OH⁻ + 2H₂O = Zn(OH)₄²⁻ + H₂

An independent chemical decomposition of zincate may also occur to form a passive film of zinc oxide, i.e.

Zn(OH)₄²⁻ = ZnO + 2OH⁻ + H₂O

The high solubility of ZnO in KOH solution leads in turn to a redistribution of active materials and a non-uniform deposition of zinc during the recharge. This results in a reduction in the geometric area and a shape change. Other problems are the formation of dendrites and the development of interelectrode short-circuits. The zinc anode is usually built as a gel electrode.

The cathode consists of compressed pellets, mainly of manganese dioxide, but must at least contain graphite because of the low conductivity of the former material.

The predominant cathode reaction is:

2MnO₂ + H₂O +2e⁻ = Mn₂O₃ + 2OH⁻

The most important difference from the discharge of a primary cell in attempted secondary cells is that in the rechargeable cell only the first electron of the manganese dioxide is allowed to be discharged. The discharge of the second electron leads to soluble Mn(II) species. The first electron discharge proceeds - via the homogeneous proton-insertion path and four valent manganese dioxide - is formally reduced to Mn01.5, i.e.:

MnO₂ +H₂O +e⁻ = MnOOH +OH⁻

The existence of soluble manganese species leads to loss of active material and rapid capacity fade.

The overall reaction system is seen as:

Zn + 2MnO₂ = ZnO + Mn₂O₃

The simplicity of the reaction system and for the reasons outlined above makes this chemistry an attractive target for conversion into a paper-based system.

Also, there are some known related technologies disclosed in the following documents:
CN 102169999 B discloses a paper type battery formed by metallic nano-material.
CN 102170000 B discloses a composite layer paper battery and preparation method.
DE 10 2016 005 326 A1 discloses a solid electrolyte and process for producing a solid electrolyte
EP 2 433 795 B1 discloses a multilayer porous film.
US 10658672 B2 discloses all-solid-state battery and manufacturing method.

The problem underlying the present invention is to provide a technology enabling large-scale production of paper-based batteries and supercapacitors in a cost-effective manner utilizing abundant and readily available raw materials.

In a first embodiment, the problem according to the present invention is solved by a coated paper where a base paper is coated at least on one side and where the coating comprises at least 5 wt.% carbon material, at least 5 wt.% of an open-framework material and at least 1 wt.% binder.

This paper was found to be useful in the manufacture of paper-based means for storing electricity such as batteries and supercapacitors. The advantage of such paper is that it can be easily produced on industrial paper machines. Also, this paper enables biodegradable batteries or supercapacitors.

This paper according to the present invention leads to several advantages of resulting paper-based devices for the storage of electrical energy: ease of manufacture, adaptable form factor, and flexibility. These qualities not only make this present invention of electrical energy storage appropriate to existing markets but open up those markets that would benefit from very local storage that could be integrated into the actual device, for example dynamic labelling and signage, integrated solar and storage panels and automotive where body panels could perform the function of storage.

### Coated Paper

The coated paper may comprise a base paper and the coating on the base paper. It is understood that this section details a dry coating on top of a dry base paper.

The base paper preferably is the carrier material for the coating and preferably produced on a regular industrial paper machine.

Preferably, the base paper has a grammage in a range from 20 to 150 g/m², more preferred 25 to 55 g/m², without the coating. The coated paper preferably has a grammage in a range from 35 to 200 g/m², more preferred 40 to 100 g/m².

Preferably, the content of the base paper in the coated paper is in a range from 50 to 80 wt.%. Preferably, the content of the coating in the coated paper is in a range from 20 to 50 wt.%.

Preferably, the pulp content of the base paper is in a range from 60 to 99 wt.%. Preferably, the base paper comprises more mechanical pulp than chemical pulp. Preferably, the base paper is a base paper comprises ground wood and/or chemical pulp. This wood containing base paper is more cost efficient than wood free paper produced on a regular paper production line.

Preferably, the base paper comprises 5 to 75 wt.%, more preferred 25 to 55 wt.% chemical pulp and/or 20 to 90 w.t%, more preferred 40 to 70 wt.%, of mechanical pulp (for example ground wood). The base paper optionally or alternatively may also include recycled fibers and/or synthetic fibers.

The coated paper preferably comprises 40 to 85 wt.% of pulp. Preferably, the coated paper comprises 5 to 60 wt.%, more preferred 10 to 40 wt.%, of chemical pulp. Preferably, the coated paper comprises 5 to 70 wt.%, more preferred 20 to 50 wt.%, of mechanical pulp and/or ground wood.

The paper may also comprise other (mechanical) fibers for example but not exclusively CTMP, ATMP, recycled fibers, viscose fibers. The base paper preferably comprises less than 1 wt.%, most preferred does not contain, synthetic fibers for better environmental footprint.

Preferably, the thickness of the base paper is in a range from 20 to 200 µm. This has the advantage of allowing sufficient ion transfer in the active material. With this thickness range higher energy density and less weight is possible. Also, less paper is needed.

Preferably, the content of filler (e.g. including carbonates, aluminosilicates, sulfates) in the base paper is in a range from 0 to 35 wt.%. Preferably, the content of carbonate in the base paper is in a range from 0 to 3 wt%. This has the advantage that the base paper will be less prone to degradation in acidic environments. The fillers in the base paper may be selected from the group comprising carbonates, silicates, oxides, clays and/or mixtures thereof.

Preferably, the content of filler in the coated paper is in a range from 0 to 25 wt.%, more preferred 1 to 5 wt.%.

Preferably, the content of thickener in the coated paper is in a range from 0.01 to 0.7 wt.%, more preferred 0.02 to 0.3 wt.%.

Preferably, the content of dispersant in the dry coating of the coated paper is in a range from 0.01 to 1 wt.%

Preferably, the coating of the paper comprises less than 1 wt.% metallic particles, more preferred does not comprise any metallic particles. This has the advantage of making the coating more cost efficient and ecologically friendly.

Preferably, the coating of the paper comprises less than 1 wt.% of a material with a median particle size of less than 1 µm.

Preferably the width of the paper is in a range from 0.7 to 15 m, more preferably in a range from 1 to 11 m.

Preferably, the length of the coated paper is in a range from 0.1 to 60 km. This has the advantage that the resulting end product can be produced in a very cost-efficient manner.

Preferably, the coated paper is coated only on one side. This way, the other side can act as separator. Alternatively, a coating can also be present on both sides of the paper.

Preferably, the coated paper is coated with the composition according to the present invention, where for example the initial coating has been dried and/or calendered.

### Carbon Material

The carbon material can be preferably selected from the group of activated carbon, amorphous carbon (e.g. soot), conductive carbon black, acetylene black, graphite, and/or graphene. The most preferred material is amorphous carbon (e.g. soot), conductive carbon black, acetylene black and/or activated carbon. Preferably, the carbon material is not carbon nanostructured material such as nanotubes, as they are very expensive.

Preferably, the coating of the paper comprises 10 to 90 wt.%, more preferred 20 to 50 wt.% of carbon material.

Preferably, the coated paper comprises 3 to 30 wt.%, more preferred 7 to 25 wt.%, of carbon material.

The content of the carbon material in the coating can preferably be in a range from 10 to 90 wt.%, more preferred 20 to 50 wt.%. If the content is lower, the energy storage capacity of the paper may suffer. If the content is higher, the carbon material may not be sufficiently bound within the coating layer. Adding too much binder will reduce the accessibility of the carbon to the electrolyte within the coating.

Preferably, the carbon material has a specific surface area (BET) in a range from 800 to 5000 m²/g. The specific surface area can be measured as described in DIN ISO 9277.

Preferably, the carbon material has a median particle size in a range from 0.5 to 500 µm, more preferred 2 to 50 µm. The particle size can be measured by optical microscopy.

### Open-framework Material

Preferably, the coating of the paper comprises 10 to 90 wt.%, more preferred 40 to 70 wt.% of open-framework material.

Preferably, the coated paper comprises 3 to 30 wt.%, more preferred 7 to 30 wt.%, of open-framework material.

The open-framework material can preferably be a clay, a metal oxide or mixtures thereof. The clay may preferably be a kaolin group mineral (e.g. kaolin). The metal oxide can preferably be manganese-oxide (e.g. MnO₂), most preferred γ-MnO₂. The most preferred clay is a kaolin with very high aspect ratio and comparatively small particles.

Open-framework material according to the present invention is defined as any material with a galleried or intercalated layered structure, especially wherein the balance of mesopores and macropores within the material allow for the permeation of ion species to the active sites of the material examples of which are e.g. pillared vanadium bronzes, dichalcogenides, intercalated graphites, galleried metal oxides, metal organic frameworks, zeolites.

It was found that the open-framework material improves wetting of the carbon material. Also, it was found that the open-framework material improves the capacity of the means for storing electricity.

Preferably, the open-framework material has a median particle size in a range from 0.1 to 5 µm, more preferably 0.2 to 2 µm. The particle size can be measured by optical microscopy.

Preferably, the aspect ratio of the open-framework material is in a range from 10:1 to 100:1.

Preferably, the open-framework material is not a carbonate and most preferred not a calcium carbonate. Carbonates easily dissolve in acidic environments and a component as this would be detrimental to a means for storing electricity comprising an acidic electrolyte.

Preferably the open-framework material is a common clay for paper coatings with a particle size distribution of medium particle size between 0.1 and 50 µm and/or an aspect ratio in a range of 10:1 to 100:1, more preferred 20:1 to 50:1. The particle size can be measured with "Helos" laser diffraction.

### Binder

Preferably, the coating of the paper comprises 0.5 to 20 wt.%, more preferred 3 to 13 wt.%, of binder. If the binder content is above this range, the pores may be closed. If the content is lower, the carbon material may not be sufficiently bound to the coating layer. This may ensure a greater stability of the ability to store electricity. Adding too much binder will reduce the accessibility in the coating. Preferably, the coated paper comprises 1 to 5 wt.%, more preferred 0.3 to 7 wt.%, of binder.

The binder may be synthetic and/or natural.

The synthetic binder is preferably selected from polymerized styrene butadiene, styrene acrylate, vinyl pyrrolidone, vinyl acetate, vinyl alcohols, vinyl ester, vinyl ether or a combination of them. The preferred amount in the coating is from 0.5 to 20 wt. %, more preferred 3 to 13 wt.%.

The natural binder is preferably selected from natural or modified starch extracted out of wheat, maize, barley, rice, potato, pea, manioc, guar, carboxylated ether (CMC) and/or mixtures thereof. The preferred amount in the coating is from 0.5 to 20 wt.%, more preferred 1 to 10 wt.%.

### Composition for coating paper

In a further embodiment, the problem of the present invention is solved by a composition for coating paper, comprising water and at least 5 wt.% carbon material and at least 5 wt.% of an open-framework material and at least 1 wt.% binder.

The dry mass of the composition preferably comprises
20 to 50 wt.% carbon material (e.g. activated carbon), and/or
40 to 70 wt.% open-framework material (e.g. clay such as kaolin), and/or
5 to 15 wt.% binder (e.g. synthetic binder such as polyvinylpyrrolidone and/or styrene butadiene), and/or
0.01 to 0.5 wt.% rheology modifier.

The coating composition preferably comprises water, open-framework material, carbon material, synthetic and natural binder, dispersant and rheology modifier.

The water content can preferably be in a range from 20 to 80 wt.%, more preferred 50 to 80 wt.%.

Preferably, the water retention value of the coating is in a range from 80 to 180 g/m². The water retention value can be measured using a DT Paper Science ÅA GWR IV measurement apparatus.

The carbon material can have preferred embodiments as disclosed above. It also can preferably be comprised in the composition in a range from 2 to 30 wt.%, especially preferred in a range from 5 to 20 wt.%.

The open-framework material can have preferred embodiments as disclosed above. The open-framework material can preferably be comprised in the composition in a range from 2 to 40 wt.%, especially preferred in a range from 5 to 30 wt.%.

The preferred amount of clay in the coating composition is from 2 to 90 wt.%, more preferred from 5 to 30 wt.%.

The weight ratio of open-framework material to carbon material can preferably be in a range from 4:1 to 1:1, more preferred 2:1 to 1.1.

The binder can have preferred embodiments as disclosed above. The binder can preferably be comprised in the composition in a range from 1 to 20 wt. %.

The composition may also comprise additional additives, such as surfactants, dispersants, thickeners, colorants, preserving agents. As an example, the composition may preferably comprise 0.01 to 2 wt.% thickener and/or 0.01 to 0.15 wt% dispersant.

Preferably, the solid content (dry mass) of the composition is in a range from 20 to 80 wt.%, more preferred 20 to 50 wt.%, most preferred 30 to 45 wt.%. If the solid content is higher, the solids might not be easily miscible with water.

Preferably, the viscosity of the composition is in a range from 200 bis 2000 mPa·s, more preferred 300 bis 1200 mPa·s, at 20°C and 1 atm. The viscosity can be measured using Haake Viscotester C with spindle 4 at 100 rpm. Preferably, the composition is capable of flowing at room temperature.

### Process for the Manufacture of the Coated Paper

In a further embodiment, the problem according to the present invention is solved by a process for the manufacture of the coated paper, characterized in that the composition according to the present invention is coated onto a base paper (e.g. an industrial manufactured paper). The base paper may be coated in an industrial coating machine.

Preferably, after the coating, the coated paper is satined in a calender (e.g. a super-calender). Preferably, the pressure during the calendering is in a range from 200 to 300 kN/m. Preferably, the temperature during the calendering is in a range from 60 to 120 °C. Alternatively every other industrial calender for example but not exclusively hard nip calender, soft nip calender, single nip calender, extended nip calender, multiple nip calender or combination of these calenders can be used.

Preferably, the composition according to the present invention is filtered before coating. Preferably the pore size of the filter sieve is in a range from 60 to 500 µm, more preferably in a range from 180 to 450 µm. The pore size can be measured by ISO 3310/1.

Preferably, the composition is coated onto the paper by a paper coating machine. The coating machine is preferably used at a speed of at least 500 m/min, most preferred at a speed of at least 1000 m/min. Preferably the width of the paper within the coating machine is in a range from 0.7 to 15 m, more preferably in a range from 1 to 11 m.

Preferably, to maximize the amount of active material in relation to the base paper, the paper is coated in one, two or more steps, first coated with a pre-coating and then with a top-coat, both using the composition according to the invention. Preferably, the pre-coating is applied in a range from 3 to 20 g/m². Preferably, the top-coat is applied in a range from 10 to 20 g/m². Preferably, the total coating is applied in an amount of 10 to 100 g/m².

Preferably, the ratio of the weight of the base paper to the weight of the coating is in a range from 2:1 to 1:1.

Preferably the coating composition is applied with a film press, a size press, a roll coater, knife coater, curtain coater, foam coater, a jet coater or a spray coater.

Preferably, the process according to the present invention is performed on a paper machine, including paper production, online or offline coating and online or offline satination/calendering.

Offline in the sense of the patent means that the paper is transported to or from the station (e.g. paper production, coating or satination). Also, offline - at least for coating and calendering - typically means winding and unwinding of the paper.

Online in the sense of the patent means that coating and/or calendering is integrated into the paper machine.

Preferably, the coating is not printed onto the paper.

### Means for storing electricity

In a further embodiment, the problem according to the present invention is solved by a means for storing electricity, comprising at least one anode and one cathode and at least one layer of coated paper according to the present invention in an electrolyte.

Preferably, the means is housed inside a housing. The housing may preferably be conductive, e.g. metallic or made of electrically conducting polymers such as conductive carbon black filled high density polyethylene. The housing may comprise at least two electrically conductive parts that are electrically insulated from each other. Preferably, at least one part of the housing is electrically connected to the cathode. Preferably, at least one other part of the housing is electrically connected to the anode.

Preferably, at least one layer of coated paper is the cathode.

The material of the anode can be selected from coated paper, metal foil (for example zinc, magnesium, aluminium), metal mesh (for example stainless steel) or flexible graphite foil.

Preferably, the lithium content of the electrodes is less than 0.1 wt.%.

The means may preferably be a battery or a supercapacitor.

Preferably, the means is comprised of individual cells.

Preferably, a cell may comprise 1 to 10,000 layers of the coated paper, preferably 2 to 200 layers of the coated paper.

Electrolyte in the sense of the invention is a solution comprising ions.

Preferably, the electrolyte is aqueous. The electrolyte may be pseudo solid (for example a colloidal system like a gel) or liquid. The electrolyte may comprise ions of metal salt. The metal salt may preferably be a nitrate or sulphate. The metal ion of the salt may preferably be selected from sodium, zinc, manganese or potassium.

Preferably, the amount of electrolyte per square meter of paper is in a range from 400 to 1600 ml.

Preferably, the voltage of the means is in a range from 0.2 to 5 V per cell, more preferably 0.6 to 2.7 V per cell, most preferably in a range from 0.6 to 1.7 V per cell.

The means may comprise separators. The separators preferably comprise less than 10 wt.% polymer.

The energy density of the constructed devices varies in accordance with the specific make up. In the case where both anode and cathode material are identical such to construct a symmetric device, then the energy density will preferably be in the range of 3 to 25 Wh per kilogram. In a device constructed in a way that the anode and cathode material differ such that an asymmetric device is constructed then the energy density preferably will be in the range of 30 to 84 Wh per kilogram.

### Further Embodiments

In a further embodiment, the problem according to the present invention is solved by the use of the coated paper according to the present invention to make batteries or supercapacitors.

In a further embodiment, the problem according to the present invention is solved by the use of the means according to the present invention to store electricity or to stabilize an electrical power network grid.

In a further embodiment, the problem according to the present invention is solved by a method for storing electricity, characterized in that the means according to the present invention is charged with electricity.

Preferably, the voltage for charging the means according to the present invention is in a range from 1.6 to 2.9 V per unit cell.

### Example 1: the Paper

A paper coating composition with the following ingredients was prepared in an otherwise usual manner:

**Table 1**

| | air dry kg | oven dry kg | Solids content in % |
|---|---|---|---|
| Water | 162,5 | 0 | 0 |
| CMC (Carboxymethylcellulose) | 0,9 | 0,8 | 90 |
| Calypso 78 (Kaolin) | 67,2 | 40 | 59,5 |
| PAK1000 (activated carbon) | 52,6 | 50 | 95 |
| Litex 9740 (styrene butadiene binder) | 14,0 | 7 | 50 |
| Luvitec K30 (PVP-binder) | 2,1 | 2 | 97 |
| Sterocoll XT (thickener) | 0,7 | 0,2 | 27 |
| Total | 300,0 | 100 | 33 |

The resulting aqueous coating composition had a solid content of 34%, viscosity of 380 mPas (measured with a Haake Viscotester C with the conditions mentioned above), a water retention of 150 g/m² and could be coated on an industrial coating machine.

Base paper with a substance of 38.7 g/m² (with 4% moisture) was coated with this coating composition on a pilot coating machine with a width of 0.5 m using a roll applicator for pre-coating and a jet coater for top-coating. The coating was applied only on one side. The paper was satinated in two-nips of a pilot calender at a temperature of 120 °C and a pressure of 300 kN/m.

The coating had a weight of 20 g/m^{2*}. After drying in the oven, the total weight was 58.2 g/m².

### Example 2: Energy Storage Device of Zinc-Ion Hybrid Super Capacitors

This example is related to an energy storage device of zinc-ion hybrid super capacitors, in which one sheet of the activated carbon/clay loaded paper based material of example 1, Zn metal foil and ZnSO₄ aqueous solution serve as cathode, anode and electrolyte, respectively.

Reversible ion adsorption/desorption on the activated carbon/clay loaded paper based materials cathode and Zn²⁺ deposition during charging and stripping during discharging on a Zinc foil anode enabled the device to repeatedly and rapidly store and deliver electrical energy, with a capacity of 121 mAh g⁻¹ (corresponding to an energy of 84 Wh kg⁻¹), a very large power output of 14.9 kW kg⁻¹ and an estimated cycling stability with 91% capacity retention over 10000 cycles.

The paper of example 1 was used as a cathode and supported with stainless steel mesh as current collector. Zinc metal foil possessing a thickness of 20 µm was purchased from Sigma Aldrich and directly used as anode electrode. The paper cathode//ZnSO₄ (aq)//Zn anode energy storage devices were assembled with electrolyte of 2 M ZnSO₄ aqueous solution, separator of two layers of air-laid paper (between the cathode and the anode) and a CR2032 coin battery shell. Cyclic voltammetry (CV) and Galvanostatic charge- discharge (GCD) techniques were applied to evaluate electrochemical behaviors of the energy storage devices. The tests were performed on an EG and G Princeton 273 potentiostat. In the CV tests with a voltage range of 0.2-1.8 V, the start voltage was set as 0.2 V, and then the voltage increased to 1.8 V and decreased to 0.2 V subsequently. Cycling stability was estimated after rate capability tests (i.e., charge/ discharge for 5 cycles at each current of 0.1, 0.2, 0.5, 1, 2, 5, 10 and 20 A g⁻¹).

CV curves showed that the energy storage system was rechargeable and able to work in a voltage range of 0.2-1.8 V (in a wider voltage range, e.g., 0.1-1.9 V, generation of oxygen and hydrogen occurs).

For the system, the CV curves did not display severe deformation at large scan rates (e.g., 200-1000 mV s⁻¹), implying that the system possesses rapid kinetics during electrochemical reactions and therefore fast energy storage.

A GCD technique was applied to measure capacity, energy density and power output of the system. At current density of 0.1 A g⁻¹, discharge capacity and energy density of the system (calculated based on cathode mass, which is 0.7-0.8 mg cm⁻²) was 121 mAh g⁻¹ and 84 Wh kg⁻¹, respectively. In addition, the system was rapidly charged/discharged within 15 seconds at a current of 20 A g⁻¹, and in this case, discharge capacity still reached 41 mAh g⁻¹, accompanying with a very high power output of 14.9 kW kg⁻¹ and an energy of 30 Wh kg⁻¹.

A safe, environmentally friendly, high-rate and long-life rechargeable energy storage system was produced. Environmental safety was suggested by the utilization of nontoxic electrode materials and aqueous electrolyte. The working voltage was in the range of 0.2-1.8 V and it was capable of delivering a high capacity of 121 mAh g⁻¹, a large energy density of 84 Wh kg⁻¹ and power density of 14.9 kW kg⁻¹.

The device possessed good rate capability and was charged and discharged very quickly within 15 seconds. The cycling stability was expected to be 91% capacity retention over 10000 cycles. Reversible ion adsorption/desorption on AC cathode and Zn²⁺ deposition/stripping on Zn anode were considered to be the core mechanism for energy storage.

### Example 3 Energy Storage Device of Zinc-Ion Hybrid Super Capacitors

This example is related to an energy storage device of zinc-ion hybrid super capacitors, in which activated carbon/clay loaded paper-based materials, Zn metal foil and ZnSO₄ aqueous solution serve as cathode, anode and electrolyte, respectively.

A highly reversible aqueous Zn/MnO₂ battery with a the MnO₂ cathode was fabricated by in situ electrodeposition of MnO₂ onto the carbon component of the device from example 2 in mild acidic ZnSO₄+MnSO₄ electrolyte yielding the new storage device (Zn/MnO₂ battery) that required no modification to production procedures, an addition to existing electrolyte of example 2 of MnSO₄ and a 'forming' process.

Rechargeable aqueous Zn/MnO₂ battery chemistry in a neutral or mildly acidic electrolyte are attractive because all the components (anode, cathode, and electrolyte) in a Zn/ MnO₂ battery are safe, abundant, and sustainable. Electrochemical and structural analysis identify that the MnO₂ cathode experiences a consequent H+ and Zn²⁺ insertion/extraction process with high reversibility and cycling stability.

The Zn/MnO₂ battery delivered a cycling performance with a low capacity decay rate of 0.007% per cycle for 10 000 cycles at a high rate of 6.5 C. The device showed a stable capacity of 50-70 mAh g⁻¹ for 10 000 cycles, reaching a high Coulombic efficiency of nearly 100%.

The Zn/MnO₂ battery achieved a discharge capacity of 290 mAh g⁻¹ at a current density of 90 mA g⁻¹ between 1.0 and 1.8 V in 2 M ZnSO₄+0.2 M MnSO₄ electrolyte, which was considered as the maximum discharge capacity to define 1 C rate as 290 mA g⁻¹. And the discharge curves in both the first and second cycle showed sloping plateaus at ∼1.4 V followed with the long flat plateau at around 1.3 V. The overpotential difference was quite small during the first two cycles.

The features of the invention disclosed in the present description, in the drawings as well as in the claims can be essential for the realization of the invention in its various embodiments, both individually and in any combination. The invention is not limited to the described embodiments. It can be varied within the scope of the claims and taking into account the knowledge of the person skilled in the art.

The highly reversible Zn/MnO₂ battery using in situ deposited MnO₂ on the carbon component of the activated carbon/clay loaded paper based material that formed the cathode was working stable up to 10 000 cycles at 6.5 C with a low capacity decay rate of 0.007% per cycle and a stable capacity of 50-70 mAh g⁻¹ for 10 000 cycles, reaching a high Coulombic efficiency of nearly 100%. The in situ formed Zn/MnO₂ battery simplified the battery fabrication process and reduced cost.

## Claims

1. Coated paper where a base paper is coated at least on one side and where the coating comprises at least 5 wt.% carbon material and at least 5 wt.% of an open-framework material and at least 1 wt.% binder.

2. Paper according to claim 1, **characterized in that** the open-framework material is a clay, a metal oxide or mixtures thereof, and/or comprised in the coating in an amount in a range from 50 to 80 wt.%.

3. Paper according to any of the previous claims, **characterized in that** the carbon material is comprised in the coating in an amount in a range from 10 to 80 wt.%, and preferably is amorphous carbon and/or activated carbon.

4. Paper according to any of the previous claims, **characterized in that** the base paper comprises 40 to 70 wt.% of mechanical pulp, preferably ground wood.

5. Paper according to any of the previous claims, **characterized in that** the thickness of the base paper is in a range from 20 to 200 µm.

6. Paper according to any of the previous claims, **characterized in that** the width of the paper is in a range from 0.7 to 15 m.

7. Composition for coating the paper, comprising water and at least 5 wt.% carbon material and at least 5 wt.% of an open-framework material and at least 1 wt.% binder.

8. Composition according to claim 7, **characterized in that** the weight ratio of open-framework material to carbon material is in a range from 4:1 to 1:1.

9. Process for the manufacture of the coated paper, **characterized in that** the composition according to claim 7 or 8 is coated onto a base paper.

10. Process according to claim 9, **characterized in that** the process is conducted on a paper machine.

11. Process according to claim 9 or 10, **characterized in that** the composition is coated onto the paper by an online or offline coating machine.

12. Process according to any of claims 9 to 11, **characterized in that** the paper is satinated online or offline after coating.

13. Means for storing electricity, comprising at least one anode and one cathode and at least one layer of coated paper according to any of claims 1 to 6 in an electrolyte.

14. Means according to claim 13, where one layer of the coated paper is the cathode.

15. Means according to any of claims 13 or 14, **characterized in that** the means is a battery or a supercapacitor.

16. Means according to any of claims 13 to 15, **characterized in that** the electrolyte is aqueous.

17. Use of the coated paper according to any of claims 1 to 6 to make batteries or supercapacitors.

18. Use of the means according to any of claims 13 to 16 to store electricity or to stabilize an electrical power network grid.

19. Method for storing electricity, **characterized in that** the means according to any of claims 13 to 16 is charged with electricity.
